# EUROPÄISCHE PATENTSCHRIFT

(11) **EP 2 933 099 B1**
(45) Veröffentlichungstag und Bekanntmachung des Hinweises auf die Patenterteilung: **07.05.2025**
(21) Anmeldenummer: 15160811.4
(22) Anmeldetag: 25.03.2015
(51) Int. Cl.: B32B 25/10, A63C 5/12, B32B 5/02, B32B 5/12, B32B 5/16, B32B 7/12

(54) **Wintersportgerät enthaltend eine Gummischicht beschichtet mit einem Fasermaterial, Verfahren zu deren Herstellung**
Wintersport equipment comprising a rubber layer covered with a fiber material and method for producing thereof
Équipement de sport d'hiver comprenant un couche de caoutchouc recouvert de matériau fibreux et procédé pour sa fabrication

(30) Priorität: 15.04.2014 DE 102014207240
(43) Veröffentlichungstag der Anmeldung: 21.10.2015
(73) Patentinhaber: Semperit AG Holding, 1100 Wien (AT)
(72) Erfinder: Haring, Walter, 2732 Willendorf (AT); Zeman-Gao, Jing, 1140 Wien (AT)
(74) Vertreter: Müller Schupfner & Partner Patent- und Rechtsanwaltspartnerschaft mbB (Muc)

(56) Entgegenhaltungen:
- WO-A1-2006/122749
- CH-A5- 662 952
- DE-A1- 2 939 637
- DE-A1- 4 018 108
- JP-A- H09 226 057
- US-A- 2 773 795
- US-A1- 2010 168 704

## Beschreibung

Die Erfindung betrifft ein Wintersportgerät, wie einen Ski oder ein Snowboard, zum Gleiten auf Schnee und ein Verfahren zur Herstellung dieses Wintersportgeräts.

Bekannte Wintersportgeräte zum Gleiten auf Schnee, insbesondere Skier und Snowboards, sind heutzutage aus mehreren Schichten aufgebaut und bilden auf diese Weise ein Verbund- oder Sandwichbauteil, welches auch als Verbundstruktur bezeichnet werden kann. Die Schichten des Verbunds werden üblicherweise miteinander verleimt beziehungsweise verklebt. Je nach spezieller Gestaltung des Skis beziehungsweise Snowboards werden aus verschiedenen Gründen an bestimmten Positionen zwischen einzelnen Schichten Gummifolien eingesetzt. Die Gummifolien entkoppeln die angrenzenden Schichten, so dass Spannungen zwischen den Schichten, beispielsweise aufgrund von Temperaturschwankungen, ausgeglichen werden können. Darüber hinaus kann eine Gummifolie eine Dämpfung bereitstellen und/oder das Eindringen von Feuchtigkeit zwischen die Schichten verhindern.

Auch bei anderen Verbundstrukturen werden zwischen einzelnen Schichten des Verbunds Gummifolien angeordnet, beispielsweise in der Auto- oder der Flugzeugindustrie. Die Verbundstrukturen, welche auch als Composite-Strukturen bezeichnet werden, ermöglichen durch den Einsatz unterschiedlicher Materialien eine gezielte Einstellung von Eigenschaften, die mit einem einzelnen Werkstoff in der Regel nicht erreicht werden können.

Die JP H09226057 A offenbart eine vibrationsdämpfende Struktur, umfassend zwei Schichten, eine Gummischicht und eine Textilschicht. Die Textilschicht wird auf die Gummischicht aufgewalzt und anschließend vulkanisiert.

Die US 2,773,795 bezieht sich auf Gummi-/Textil-Laminate, beispielsweise zur Verwendung bei Reifen.

Die DE 2 939 637 betrifft ein Verfahren zur Herstellung eines endlosen Druckbandes einer Vorrichtung zum kontinuierlichen Pressen und Dekatieren von Geweben, Gewirken und dergleichen.

Die WO 2006/122749 A1 betrifft ein Verbundbauteil aus wenigstens zwei Schichten, wobei eine erste Schicht zumindest teilweise aus einem wärmehärtenden Kunstharz besteht und wobei eine zweite Schicht zumindest teilweise aus einem Elastomer besteht, wobei die wenigstens eine, teilweise aus einem wärmehärtenden Kunstharz bestehende erste Schicht und die wenigstens eine, zumindest teilweise aus einem mit einem Vernetzer versehenen Elastomer bestehende zweite Schicht durch einen Energieeintrag, wie eine gemeinsame Wärmebehandlung oder eine Bestrahlung, in einem Arbeitsgang zusammengefügt sind.

Die US 2010/0168704 A1 betrifft ein Verfahren zum Formen eines elastischen Verbunds aus einem Laminat, welches einen elastischen Film und eine nicht gewebte Beschichtung aufweist.

Die DE 4 018 108 A1 betrifft Metallkomponenten aus einem geformten Metallsubstrat mit einer Kautschukbeschichtung für die Herstellung von Kunststoffgegenständen.

Die CH 662 952 A5 betrifft ein Verfahren zur Herstellung eines sandwichartig aufgebauten Skibrettes durch abwechselndes Übereinanderlegen von Schichten aus Blech, Elastomerfolie und unter Einsatz von Klebesystemen, die mit den Schichten durch Verpressen verbunden werden.

Verbundstrukturen werden insbesondere im Bereich hochbelasteter Bauteile eingesetzt. Beispielsweise ist ein Ski oder Snowboard im Gebrauch erheblichen statischen und dynamischen Belastungen ausgesetzt. Dabei besteht das grundsätzliche Problem, dass bei Gummifolien mit einer üblichen, relativ glatten Oberfläche eine vollflächige Verklebung mit den angrenzenden Schichten nicht zuverlässig gewährleistet werden kann.

Es wurden daher Gummifolien entwickelt, die durch eine spezielle Behandlung der Oberfläche eine Oberflächenstruktur aufweisen, welche bereits eine sehr gute Verklebbarkeit gewährleistet.

Der Erfindung liegt die Aufgabe zugrunde, eine Folie und ein Verfahren zur Herstellung einer Folie anzugeben, welche auf besonders wirtschaftliche Weise eine hervorragende Verklebbarkeit gewährleisten. Die Aufgabe der Erfindung besteht des Weiteren darin, ein kosteneffizient herzustellendes und stabiles Wintersportgerät zum Gleiten auf Ski, bereitzustellen.

Die Aufgabe wird erfindungsgemäß durch eines mehrschichtiges Wintersportgerät zum Gleiten auf Schnee mit den Merkmalen des Anspruchs 1 und ein Verfahren mit den Merkmalen des Anspruchs 10 gelöst. Bevorzugte Ausgestaltungen der Erfindung sind in den abhängigen Ansprüchen sowie der nachfolgenden Beschreibung, insbesondere im Zusammenhang mit den beiliegenden Figuren, angegeben und weiter erläutert.

Die Folie, welche insbesondere zur Verwendung als Zwischenschicht in einem Verbund- oder Sandwichbauteil vorgesehen und geeignet ist, umfasst eine Gummischicht mit einer im Wesentlichen flächigen Oberseite und einer im Wesentlichen flächigen Unterseite. Erfindungsgemäß ist die Oberseite und/oder die Unterseite der Gummischicht mit einem Gewebe, einem Gewirk und/oder einem Vliesstoff beschichtet. Bei dem erfindungsgemäßen Verfahren zur Herstellung einer Folie, insbesondere einer erfindungsgemäßen Folie, wird eine Gummischicht mit einer im Wesentlichen flächigen Oberseite und einer im Wesentlichen flächigen Unterseite bereitgestellt und die Oberseite und/oder die Unterseite der Gummischicht mit einem Gewebe, einem Gewirk und/oder einem Vliesstoff beschichtet. Das erfindungsgemäße Verbundbauteil, bei welchem es sich um ein mehrschichtiges Wintersportgerät zum Gleiten auf Schnee, insbesondere einen Ski oder ein Snowboard, handeln kann, umfasst eine Mehrzahl von miteinander verbundenen Schichten, wobei zwischen benachbarten Schichten eine elastische Folie angeordnet ist, welche mit den benachbarten Schichten jeweils mittels eines Klebstoffs stoffschlüssig verbunden ist. Als elastische Folie wird hierbei eine erfindungsgemäße Folie eingesetzt beziehungsweise verwendet.

Die Erfindung bezieht sich grundsätzlich auch auf die Verwendung einer erfindungsgemäßen Folie als Zwischenschicht in einem mehrschichtigen Wintersportgerät zum Gleiten auf Schnee, besonders bevorzugt einem Ski oder Snowboard. Es versteht sich, dass die zusätzlichen und die bevorzugten Merkmale der erfindungsgemäßen Folie ebenfalls in dem Verbundbauteil Anwendung finden können.

Darüber hinaus bezieht sich die Erfindung grundsätzlich auch auf ein Verfahren zum miteinander Verkleben von Schichten eines Verbund- oder Sandwichbauteils, wobei auf eine erfindungsgemäße Folie, insbesondere vollflächig, einseitig oder zweiseitig, eine Klebeschicht aufgetragen wird und die Folie mit mindestens einer angrenzenden Schicht des Verbundbauteils, insbesondere vollflächig, verklebt wird. Es versteht sich, dass die zusätzlichen und die bevorzugten Merkmale der erfindungsgemäßen Folie ebenfalls in dem Verfahren Anwendung finden können.

Durch die Beschichtung der Gummischicht mit einem Faser- oder Fadenmaterial (Gewebe, Gewirk, Vlies) wird eine besonders gute und insbesondere gleichmäßige Benetzbarkeit der Oberfläche der Folie erreicht. Das Gewebe, Gewirk beziehungsweise der Vlies bildet aufgrund der Fäden / Fasern eine durchgehend porige Struktur an der Oberfläche der Folie, in die ein Klebstoff eindringen kann. Da ein Gewebe, Gewirk beziehungsweise Vlies ausschließlich aus Fäden oder Fasern besteht, sind keine flächigen Bereiche vorhanden, die gegebenenfalls schlecht benetzt würden. Ein auf das Gewebe, Gewirk beziehungsweise Vlies aufgetragener Klebstoff benetzt daher die unter beziehungsweise hinter der Beschichtung liegende Gummischicht gleichmäßig. Die Bildung sogenannter "Benetzungsnester", welche im Stand der Technik gegebenenfalls zu Verklebungsschwierigkeiten und zu einem erhöhten Aufwand in der Produktion oder zu Ausschuss führen, wird wirksam verhindert.

Durch die Beschichtung wird also eine homogen (gleichmäßig) strukturierte Oberfläche der Folie bereitgestellt, welche sehr gut benetzbar ist. Damit ist eine besonders zuverlässige Verklebung möglich, welche somit eine besonders zuverlässige Herstellung eines Verbundbauteils mit möglichst geringem Ausschuss ermöglicht. Folglich können Herstellungskosten gesenkt und die Qualität eines Verbundbauteils insgesamt erhöht werden.

Um die besonders gute Benetzbarkeit der Folie mit einem Klebstoff zu gewährleisten, bildet das Gewebe, Gewirk und/oder der Vliesstoff vorzugsweise eine Außenseite der Folie. Das Gewebe, Gewirk beziehungsweise der Vliesstoff ist also zumindest nicht vollständig in die Gummischicht eingebettet, sondern von außen auf die Gummischicht aufgebracht und der Umgebung ausgesetzt. Auf diese Weise weist die Folie außenseitig eine Beschichtung aus Gewebe, Gewirk oder Vliesstoff auf.

Bei der Gummischicht handelt es sich insbesondere um eine Gummifolie, also eine dünne, blattartige Schicht aus einem Gummimaterial. Gummi ist ein aus vulkanisiertem Kautschuk (Naturkautschuk und/oder Synthesekautschuk) hergestellter Werkstoff und zählt zu der Gruppe der Elastomere. Die Gummischicht bzw. Gummifolie enthält vorzugsweise Elastomere, wie zum Beispiel Ethylen-Propylen-Dien-Kautschuk (EPDM), Nitrilkautschuk (NBR), Styrol-Butadien-Kautschuk (SBR) oder Naturkautschuk. Die Härte beträgt vorzugsweise 50 bis 80 Shore A. Die Reißfestigkeit beträgt vorzugsweise mindestens 4 N/mm², besonders bevorzugt mindestens 8 N/mm². Die Reißdehnung beträgt erfindungsgemäß mindestens 50%, bevorzugt mindestens 200%. Die Trommelschälfestigkeit beträgt erfindungsgemäß mindestens 1 N/m.

Unter einem Gewebe im Sinne der Erfindung wird insbesondere ein manuell oder maschinell gefertigtes Erzeugnis der Weberei aus mindestens zwei miteinander verkreuzten Fadensystemen verstanden, beispielsweise Tuch, Samt, Velours, Plüsch, Frottee oder ein anderes Flächengebilde. Ein Gewirk im Sinne der Erfindung ist insbesondere ein durch Maschenbildung auf einer Wirkmaschine industriell hergestellter Stoff. Unter einem Vliesstoff oder Vlies im Sinne der Erfindung wird insbesondere ein Gebilde aus Fasern begrenzter Länge, Endlosfasern oder geschnittenen Garnen jeglicher Art und jeglichen Ursprungs verstanden, die zusammengefügt und miteinander verbunden sind.

Das Gewebe, Gewirk und/oder der Vliesstoff ist vorzugsweise stoffschlüssig mit der Gummischicht verbunden, insbesondere auf die Gummischicht aufgepresst und/oder in die Gummischicht eingepresst. Vorzugsweise erfolgt die stoffschlüssige Verbindung ohne ein zusätzliches Material, insbesondere ohne Verwendung eines Klebstoffs. Die stoffschlüssige Verbindung kann beispielsweise durch Kalandrieren des Grundmaterials (Gummischicht, Gummifolie) mit der Beschichtung (Gewebe, Gewirk und/oder Vliesstoff) bewirkt werden. Gummischicht und Beschichtung bilden einen nicht lösbaren Verbund beziehungsweise eine nicht lösbare Einheit. Die erfindungsgemäße Folie kann somit auch als ein Verbundwerkstoff (Verbundfolie) bezeichnet werden. Hierbei sind flächige Schichten, nämlich vorzugsweise eine reine Gummifolie und ein Gewebe, Gewirk und/oder Vliesstoff, stoffschlüssig und gegebenenfalls zusätzlich formschlüssig miteinander verbunden.

In einer weiteren bevorzugten Ausführungsform wird durch die erfindungsgemäße Beschichtung der Gummifolie erreicht, dass die Gummischicht über Zwischenräume in dem Gewebe, Gewirk und/oder Vliesstoff mit der Umgebung in Verbindung steht. Die in dem Gewebe, Gewirk und/oder Vliesstoff naturgemäß ausgebildeten Zwischenräume zwischen den Fäden oder Fasern werden also nicht oder jedenfalls nicht vollständig von dem Material der Gummischicht verschlossen. Mit anderen Worten dringt die Gummischicht allenfalls teilweise in die Faden- beziehungsweise Faserzwischenräume ein und steht über die übrigen Zwischenräume mit der Umgebung in Verbindung, so dass Klebstoff bis zur Gummischicht in die Zwischenräume eindringen und sich dort verteilen kann. Die Außenseite der erfindungsgemäßen Folie ist offenporig, also nicht derart versiegelt, dass die Zwischenräume zwischen den Fäden oder Fasern verschlossen sind.

Erfindungsgemäß kann die Folie entweder einseitig oder beidseitig mit dem Gewebe, Gewirk und/oder Vliesstoff beschichtet sein. Je nach Anwendungsfall, insbesondere abhängig vom angrenzenden Material, welches mit der Folie verklebt werden soll, kann eine einseitige oder beidseitige Beschichtung vorteilhaft sein. Auch können die Oberseite und die Unterseite unterschiedlich beschichtet sein, wobei jegliche Kombination von Gewebe, Gewirk und Vliesstoff denkbar ist. Somit können beispielsweise sowohl die Oberseite als auch die Unterseite beschichtet sein, wobei die beiden Seiten mit unterschiedlichen Strukturen (Gewebe, Gewirk, Vliesstoff) beschichtet sind. Beispielsweise kann eine erste Seite mit einem Gewebe und eine zweite Seite mit einem Gewirk und/oder Vliesstoff beschichtet sein. Grundsätzlich ist es auch denkbar, unterschiedliche Dicken und/oder unterschiedliche Materialien des Gewebes, Gewirks und/oder Vliesstoffs auf der Oberseite und der Unterseite der Folie zu verwenden. Auf diese Weise kann die Folie speziell an ihren vorgesehenen Einsatz in einem Verbundbauteil, insbesondere an die angrenzenden Materialien und/oder an unterschiedliche Klebstoffe, angepasst werden.

In einer weiteren bevorzugten Ausführungsform weist die Gummischicht beziehungsweise Gummifolie, welche mit dem Gewebe, Gewirk und/oder Vliesstoff beschichtet ist, eine strukturierte Oberfläche auf. Das Gewebe, Gewirk und/oder der Vliesstoff ist also auf eine bereits strukturierte Gummischicht aufgebracht, so dass am Übergang zwischen Gummischicht und Gewebe, Gewirk beziehungsweise Vliesstoff bereits eine Oberflächenstruktur in Form von Erhebungen und Vertiefungen vorhanden ist, die die Benetzbarkeit der Folie weiter erhöht. Der Klebstoff kann somit durch die Zwischenräume in dem Gewebe, Gewirk beziehungsweise Vliesstoff zur Oberfläche der Gummischicht durchdringen, wo er aufgrund der dort vorhandenen Oberflächenstruktur die Gummischicht gut benetzt. Auf diese Weise wird eine sichere Benetzung der Oberfläche der Gummischicht und damit eine sichere und feste Verklebung der Folie gewährleistet.

Es ist des Weiteren bevorzugt, dass die Folie gebeizt ist. Das Beizen der Folie kann insbesondere zur Bereitstellung einer strukturierten Oberfläche dienen und grundsätzlich vor oder nach dem Beschichten mit dem Gewebe, Gewirk und/oder Vliesstoff erfolgen. Das Beizen bezieht sich somit auf die Gummischicht beziehungsweise Gummifolie und/oder das durch Beschichtung hergestellte Endprodukt (Folie). Unter Beizen wird insbesondere eine Behandlung der Oberfläche, insbesondere der Oberfläche der unbeschichteten oder beschichteten Gummischicht, verstanden. Die Behandlung dient der Veränderung der Oberfläche, insbesondere deren Aufrauung. Alternativ oder zusätzlich kann auch das Gewebe, Gewirk beziehungsweise der Vliesstoff selbst mit einer Beschichtung versehen sein, beispielsweise einem Haftvermittler. Dabei können auch unterschiedliche Beschichtungen des Gewebes, Gewirks und/oder Viesstoffes (zum Beispiel an Ober- und Unterseite der Folie) vorgesehen sein.

Im Hinblick auf das erfindungsgemäße Verfahren ist es bevorzugt, dass das Gewebe, Gewirk und/oder der Vliesstoff mit der Gummischicht, insbesondere in einem Kalander, verpresst wird. Durch das Aufkalandrieren der Beschichtung, insbesondere unter Wärmeeinwirkung, wird ein stabiler Verbund erreicht. Die Schichten der Folie sind durch das Kalandrieren vorzugsweise stoffschlüssig und dauerhaft (nicht-lösbar) miteinander verbunden. Dabei wird vorzugsweise kein Klebstoff zur stoffschlüssigen Verbindung verwendet.

In einer weiteren bevorzugten Ausführungsform wird die Gummischicht nach dem Beschichten mit dem Gewebe, Gewirk und/oder Vliesstoff vulkanisiert. Durch das Vulkanisieren wird in grundsätzlich bekannter Weise das Gummi (beziehungsweise der Kautschuk) gegen mechanische Beanspruchung widerstandsfähig gemacht und vom plastischen in einen elastischen Zustand überführt. Die Vulkanisation kann grundsätzlich aber auch gleichzeitig mit dem Aufkalandrieren des Gewebes, Gewirks und/oder Vliesstoffes erfolgen.

Zur Einstellung der gewünschten Oberflächeneigenschaften wird die mit dem Gewebe, Gewirk und/oder Vliesstoff beschichtete Gummischicht vorzugsweise, insbesondere nach dem Vulkanisieren, gebeizt. Durch die Behandlung mit Beize wird die Oberfläche der Folie, insbesondere die Oberfläche der Gummischicht und/oder die Oberfläche des Gewebes, Gewirks/Vlieses aufgeraut. Das Beizen erfolgt vorzugsweise in Säure. Alternativ oder zusätzlich kann eine Koronabehandlung erfolgen. Hierbei wird die unbeschichtete oder beschichtete Gummischicht einer elektrischen Hochspannungsentladung ausgesetzt. Des Weiteren kann eine Plasmabehandlung, Fluorierung und/oder eine mechanische Oberflächenbehandlung erfolgen.

Insbesondere kann vorgesehen sein, dass die Folie nach dem Beschichten, vorzugsweise unter Zwischenlegen eines Vorläuferstoffes, aufgewickelt und vulkanisiert wird. Der Vorläuferstoff verhindert hierbei ein Zusammenkleben der Wicklungen beim Vulkanisieren. In einer weiteren bevorzugten Ausführungsform wird die vulkanisierte Folie, vorzugsweise, nachdem diese von dem Vorläuferstoff getrennt wurde, einer Oberflächenbehandlung mittels Beize unterzogen.

Vorzugsweise wird das Gewebe, Gewirk und/oder der Vliesstoff vollflächig auf die Gummischicht beziehungsweise Gummifolie aufgebracht. Grundsätzlich ist aber auch ein streifenweises Aufbringen des Gewebes, Gewirks beziehungsweise Vliesstoffs denkbar, um gezielte Verklebungsbereiche zu schaffen. Die vulkanisierte Folie kann zur Bildung einer Antitorsionsfolie (STP-Antitorsionsfolie) gegebenenfalls gelocht werden. Durch die Lochung wird bei einer Verklebung eine Klebstoffsäule gebildet, die sich durch die Folie erstreckt und eine Verbesserung der Torsionssteifigkeit der Folie bewirkt. Die erfindungsgemäße Beschichtung verhindert in diesem Zusammenhang effektiv das Ansammeln von Klebstoff ausschließlich im Bereich der Löcher, so dass weiterhin eine vollflächige, sichere Verklebung gewährleistet wird.

Vorzugsweise weist die Folie eine Härte nach Shore A zwischen 30 und 80, vorzugsweise zwischen 40 und 70, auf. Es ist bevorzugt, dass die Folie viskoelastische Eigenschaften aufweist.

Die Erfindung wird nachfolgend anhand der beiliegenden, schematischen Darstellungen weiter erläutert. Hierin zeigt:
- Figur 1: eine Explosionsdarstellung einer erfindungsgemäßen Folie;
- Figur 2: eine Schnittdarstellung einer ersten Ausführungsform eines erfindungsgemäßen Verbundbauteils; und
- Figur 3: eine Schnittdarstellung einer zweiten Ausführungsform eines erfindungsgemäßen Verbundbauteils.

Gleiche oder gleichwirkende Elemente sind in sämtlichen Figuren mit denselben Bezugszeichen gekennzeichnet. Die anhand der einzelnen Ausführungsformen beschriebenen Merkmale können, soweit technisch möglich, grundsätzlich auch miteinander kombiniert werden.

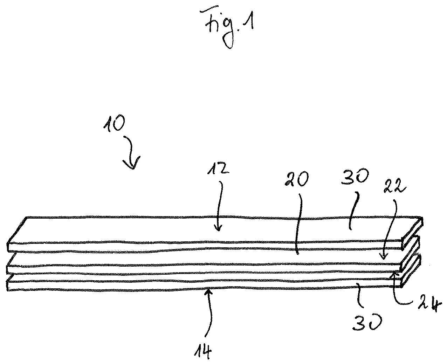

Figur 1 zeigt in schematischer Form den Aufbau einer erfindungsgemäßen Folie 10. Die Folie 10 umfasst eine Gummischicht 20, welche auch als Gummifolie bezeichnet werden kann. Die Gummischicht 20 ist zwischen zwei stark schematisiert dargestellten Beschichtungen 30, die aus einem Gewebe, Gewirk oder einem Vliesstoff 30 bestehen, angeordnet. Die durch die Gummischicht 20 und die Beschichtungen 30 gebildete Folie 10 weist eine erste Außenseite 12 und eine zweite Außenseite 14 auf.

Die Gummischicht 20 ist eine flächige, vorzugsweise wasserundurchlässige Schicht (Gummifolie) mit einer Oberseite 22 und einer Unterseite 24. Auf diese dünne, folienartige Gummischicht 20 sind beidseitig faden- oder faserförmige Schichten aufgebracht, die die Gummischicht 20 (Oberseite 22 und Unterseite 24) vollflächig bedecken.

Die Gesamtdicke der Folie 10 beträgt vorzugsweise 0,3 mm bis 10 mm. In einer besonders bevorzugten Ausführungsform beträgt die Dicke der Folie etwa 0,5 mm bis 2 mm. Die Materialstärke beziehungsweise Dicke der Gummischicht 20 beträgt vorzugsweise 0,1 mm bis 2,2 mm, besonders bevorzugt 0,1 mm bis 0,5 mm. Die faden- oder faserförmige Beschichtung 30 weist vorzugsweise jeweils eine Materialstärke beziehungsweise Dicke von maximal 1,2 mm, vorzugsweise zwischen 0,1 mm und 1,2 mm, auf. Die beiden Außenbeschichtungen können unterschiedliche Strukturen aufweisen. Beispielsweise kann eine erste Beschichtung 30 ein Vliesstoff und eine zweite Beschichtung 30 ein Gewirk sein. Im Fall einer Vliesstoffbeschichtung kann die Materialstärke beispielsweise 0,1 mm bis 0,3 mm betragen. Ein Gewirk weist vorzugsweise eine Materialstärke von 0,6 mm bis und 1,2 mm auf. Die genannten Werte beziehen sich insbesondere auf die Dicke der Folie 10 ohne Wirkung der Einpressung.

Die Gummischicht 20 weist eine Oberflächenstruktur in Form von Erhebungen und Vertiefungen auf. Die Erhebungen und Vertiefungen, vorzugsweise im Mikrometerbereich, gewährleisten bereits für sich genommen eine gute Benetzbarkeit mit einem Klebstoff, der durch die Faser- oder Fadenschicht (Beschichtung 30) zur Oberfläche der Gummischicht 20 gelangt. Die Oberflächenstruktur wird beispielsweise durch eine chemische Behandlung (Beize) erreicht.

Das Gewebe beziehungsweise Gewirk besteht aus einzelnen Fäden, die miteinander verkreuzt (Gewebe) oder durch Maschenbildung miteinander verbunden sind (Gewirk). Das Vlies besteht aus Fasern begrenzter Länge oder Endlosfasern, die zu einer Faserschicht zusammengefügt sind. Vorzugsweise besteht das Gewebe, Gewirk beziehungsweise der Vlies aus Glasfaser. Das Glasfasergewebe, -gewirk beziehungsweise -vlies ist mit der Gummifolie 20 verpresst (in diese eingepresst) und auf diese Weise stoffschlüssig und/oder formschlüssig verbunden. Zwischen den einzelnen Fasern beziehungsweise Fäden der Beschichtung 30 sind Zwischenräume ausgebildet, die sich zwischen der Oberseite 22 beziehungsweise Unterseite 24 der Gummischicht 20 und der Außenseite 12 beziehungsweise 14 der Folie 10 erstrecken. Auf diese Weise ist die Gummischicht 20 derart zur Umgebung hin exponiert, dass ein auf die Folie 10 aufgetragener Klebstoff (nicht dargestellt) durch die Zwischenräume oder Poren der Beschichtung 30 zur Oberfläche der Gummischicht 20 gelangt. Die Beschichtung 30 bewirkt damit eine gleichmäßige Benetzbarkeit der gesamten Oberfläche der Folie 10 beziehungsweise der Gummischicht 20.

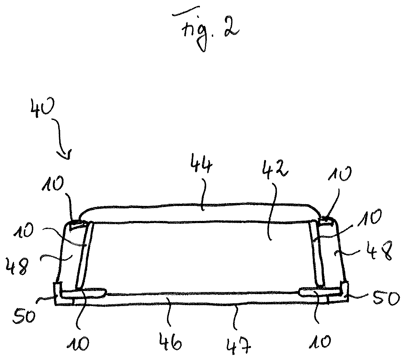

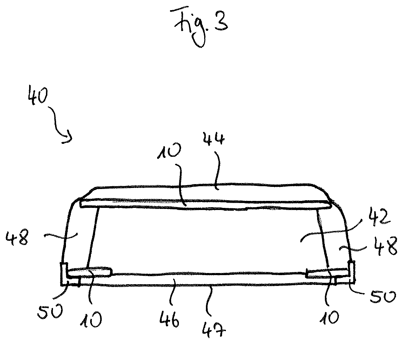

Figuren 2 und 3 zeigen beispielhafte Ausführungsformen der Verwendung einer erfindungsgemäßen Folie 10 in einem Verbundbauteil, nämlich einem Wintersportgerät 40, beispielsweise einem Ski oder einem Snowboard.

Das mehrschichtige Wintersportgerät 40 umfasst in grundsätzlich bekannter Weise einen Kern 42, beispielsweise aus Holz oder einem geschäumten Material (zum Beispiel Polyurethanschaum). An einer Oberseite des Kerns 42 befindet sich ein sogenannter Obergurt 44, welcher die Oberseite des Wintersportgeräts 40 bildet. An einer Unterseite des Wintersportgeräts 40 ist ein Belag 46 mit einer Lauffläche 47 vorhanden. Seitlich des Kerns 42 sind Seitenwangen 48 ausgebildet. Obergurt 44 und Seitenwangen 48 können grundsätzlich auch einteilig ausgebildet sein. Am Übergang zwischen den Seitenwangen 48 und dem Belag 46 sind Kanten 50, insbesondere Stahlkanten, angeordnet.

Die Folie 10 kann an unterschiedlichen Positionen zwischen einzelnen Schichten des Wintersportgeräts 40 angeordnet sein. Beispielsweise kann die Folie 10 als ein sich in Längsrichtung des Wintersportgeräts 40 erstreckender Folienstreifen im Bereich der Kanten 50 angeordnet sein (Figuren 2 und 3). Die Folie 10 grenzt hierbei an den Kern 42, den Belag 46 sowie die Seitenwange 48 an. Die Folie 10 ist mit sämtlichen dieser Elemente verklebt. Durch die Beschichtung der Folie 10 mit dem Gewebe, Gewirk oder Vlies lässt sich eine gleichmäßige Benetzung mit Klebstoff erreichen, so dass eine zuverlässige Verklebung mit den angrenzenden Schichten des Verbundbauteils gewährleistet werden kann. Durch eine Beschichtung mit unterschiedlichen Materialien und/oder Strukturen kann die Folie 10 gezielt an die angrenzenden Materialien angepasst werden.

Wie in Figur 2 dargestellt, kann sich eine weitere erfindungsgemäße Folie 10 am Übergang zwischen dem Kern 42 und den Seitenwangen 48 befinden. Die Folie 10 erstreckt sich hier ebenfalls streifenartig in Längsrichtung des Wintersportgeräts 40. Figur 2 zeigt zudem eine weitere, sich streifenartig entlang des Wintersportgeräts 40 erstreckende Folie 10 jeweils am Übergang zwischen einer Seitenwange 48 und dem Obergurt 44.

Eine weitere Ausführungsform ist in Figur 3 gezeigt. Der hier dargestellte Ski umfasst, wie bei der Ausführungsform gemäß Figur 2, jeweils im Bereich der Kanten 50 angeordnete Folien 10. Darüber hinaus ist flächig, sich annähernd über die gesamte Breite des Wintersportgeräts 40 erstreckend, eine Folie 10 zwischen dem Kern 42 und dem Obergurt 44 vorhanden.

Neben den dargestellten Ausführungsformen sind diverse weitere Ausgestaltungen und Anordnungen einer Folie 10 in einem Verbundbauteil oder Wintersportgerät 40 möglich. Beispielsweise können zwischen einzelnen Schichten, insbesondere zwischen Kern 42 und Obergurt 44, mehrere einzelne Folien angeordnet sein. Es kann beispielsweise eine erste Folie in einem Rückbereich eines Skis, eine zweite Folie in einem Mittelbereich des Skis und eine dritte Folie in einem Frontbereich des Skis angeordnet sein. Der Ski kann darüber hinaus weitere Schichten und/oder gezielte Gewichtseinlagen enthalten. Die erfindungsgemäße Folie 10 kann als Streifen am Randbereich eines Wintersportgeräts angeordnet sein und/oder sich im Wesentlichen vollständig zwischen zwei Schichten entlang der gesamten Breite des Skis erstrecken.

Die Herstellung der erfindungsgemäßen Folie erfolgt vorzugsweise mit folgenden Schritten:
1. Aufkalandrieren der Beschichtung (Gewebe, Gewirk, Vlies) am Kalander und gegebenenfalls Aufwickeln auf einen Dorn.
2. Abwickeln des durch das Kalandrieren gebildeten Verbundpakets vom Dorn und Aufwickeln des Verbundpakets auf einen Tambur, wobei das Verbundpaket vorzugsweise in einen Vorläuferstoff (Zwischenstoff) eingewickelt wird, um eine Zusammenkleben der Schichten beim anschließenden Vulkanisieren zu verhindern.
3. Vulkanisieren des Verbundpakets.
4. Auswickeln den vulkanisierten Verbundpakets und Trennen des Vorläuferstoffs.
5. Oberflächenbehandlung des vulkanisierten Verbundpaktets mittels Koronabehandlung und/oder Plasmabehandlung und/oder Fluorierung und/oder Beize, insbesondere in Säure.
6. Gegebenenfalls Kommissionierung des vulkanisierten Verbundpakets nach Kundenwunsch.

Insgesamt wird durch die erfindungsgemäße Folie 10 eine gegenüber dem Stand der Technik verbesserte Benetzbarkeit mit einem Klebstoff erreicht. Die Folie kann insbesondere zur Verklebung von Schichten eines Verbundbauteils eingesetzt werden, deren Materialien grundsätzlich schwer zu verkleben sind. Darüber hinaus gewährleistet die erfindungsgemäße Folie durch die Elastizität ihrer Gummischicht eine Schwingungsdämpfung und/oder einen Ausgleich von statischen und dynamischen Bewegungen zwischen den Schichten eines Verbundbauteils, beispielsweise aufgrund unterschiedlicher Dehnungskoeffizienten zweier Werkstoffe.

### Bezugszeichenliste:

- 10: Folie
- 12: erste Außenseite
- 14: zweite Außenseite
- 20: Gummischicht
- 22: Oberseite
- 24: Unterseite
- 30: Beschichtung
- 40: Wintersportgerät
- 42: Kern
- 44: Obergurt
- 46: Belag
- 47: Lauffläche
- 48: Seitenwangen
- 50: Kanten

## Patentansprüche

1. Mehrschichtiges Wintersportgerät (40) zum Gleiten auf Schnee, aufweisend
eine Mehrzahl von miteinander verbundenen Schichten,
wobei zwischen benachbarten Schichten eine elastische Folie angeordnet ist, welche mit den benachbarten Schichten jeweils mittels eines Klebstoffs stoffschlüssig verbunden ist,
wobei als elastische Folie eine Folie (10) eingesetzt wird, die folgendes aufweist:
eine Gummischicht (20) mit einer flächigen Oberseite (22) und einer flächigen Unterseite (24),
wobei die Oberseite (22) und/oder die Unterseite (24) der Gummischicht (20) mit einem Gewebe, einem Gewirk und/oder einem Vliesstoff beschichtet ist, **dadurch gekennzeichnet, dass** die Reißdehnung mindestens 50% und die Trommelschälfestigkeit mindestens 1 N / m beträgt.

2. Mehrschichtiges Wintersportgerät nach Anspruch 1,
wobei das Gewebe, Gewirk und/oder der Vliesstoff eine Außenseite (12, 14) der Folie (10) bildet und von außen auf die Gummischicht (20) aufgebracht ist.

3. Mehrschichtiges Wintersportgerät nach einem der vorhergehenden Ansprüche, wobei die Gummischicht (20) als Gummifolie ausgebildet ist und ein Material aufweist, welches Elastomere, wie zum Beispiel Ethylen-Propylen-Dien-Kautschuk (EPDM), Nitrilkautschuk (NBR), Styrol-Butadien-Kautschuk (SBR) oder Naturkautschuk enthält.

4. Mehrschichtiges Wintersportgerät nach einem der vorhergehenden Ansprüche, wobei die Folie eine Härte nach Shore A zwischen 30 und 80.

5. Mehrschichtiges Wintersportgerät nach einem der vorhergehenden Ansprüche, wobei die Reißfestigkeit der Folie mindestens 4 N/mm² beträgt.

6. Mehrschichtiges Wintersportgerät nach einem der vorhergehenden Ansprüche,
wobei das Gewebe, Gewirk und/oder der Vliesstoff stoffschlüssig mit der Gummischicht (20) verbunden, insbesondere auf die Gummischicht (20) aufgepresst ist, und wobei vorzugsweise die stoffschlüssige Verbindung ohne ein zusätzliches Material, insbesondere ohne Verwendung eines Klebstoffs vorgesehen ist.

7. Mehrschichtiges Wintersportgerät nach einem der vorhergehenden Ansprüche,
wobei die Gummischicht (20) über Zwischenräume in dem Gewebe, Gewirk und/oder Vliesstoff mit der Umgebung in Verbindung steht.

8. Mehrschichtiges Wintersportgerät nach einem der vorhergehenden Ansprüche, wobei die Oberseite und die Unterseite unterschiedlich beschichtet sind.

9. Mehrschichtiges Wintersportgerät nach einem der vorhergehenden Ansprüche, wobei das Gewebe, Gewirk beziehungsweise der Vliesstoff selbst mit einer Beschichtung versehen sind.

10. Verfahren zur Herstellung -eines mehrschichtigen Wintersportgeräts nach einem der Ansprüche 1 bis 9,
wobei eine Gummischicht (20) mit einer flächigen Oberseite (22) und einer flächigen Unterseite (24) bereitgestellt wird und
wobei die Oberseite (22) und/oder die Unterseite (24) der Gummischicht (20) mit einem Gewebe, einem Gewirk und/oder einem Vliesstoff beschichtet wird und wobei ein Klebstoff durch Zwischenräume im Gewebe, Gewirk und/oder Vliesstoff zur Oberfläche der Gummischicht (20) durchdringt.

11. Verfahren nach einem Anspruch 10,
wobei das Gewebe, Gewirk und/oder der Vliesstoff mit der Gummischicht (20), insbesondere in einem Kalander, verpresst wird.

12. Verfahren nach Anspruch 10 oder 11,
wobei die Gummischicht (20) nach der Beschichtung mit dem Gewebe, Gewirk und/oder Vliesstoff vulkanisiert wird.

13. Verfahren nach einem der Ansprüche 10 - 12,
wobei die mit dem Gewebe, Gewirk und/oder Vliesstoff beschichtete Gummischicht (20) nach dem Vulkanisieren gebeizt wird.

## Claims

1. Multi-layer winter sports equipment (40) for gliding on snow, comprising
a number of interconnected layers,
wherein an elastic film is arranged between adjacent layers, which is bonded to the adjacent layers by means of an adhesive,
wherein a film (10) having the following is used as the elastic film:
a rubber layer (20) with a flat upper side (22) and a flat underside (24),
wherein the upper side (22) and/or the underside (24) of the rubber layer (20) is coated with a woven fabric, a knitted fabric and/or a nonwoven fabric, **characterized in that** the elongation at break is at least 50% and the drum peel strength is at least 1 N / m.

2. Multi-layer winter sports equipment according to claim 1,
wherein the woven fabric, knitted fabric and/or nonwoven fabric forms an outer side (12, 14) of the film (10) and is applied to the rubber layer (20) from the outside.

3. Multi-layer winter sports equipment according to any one of the preceding claims, wherein the rubber layer (20) is formed as a rubber film and comprises a material which contains elastomers, such as ethylene-propylene-diene rubber (EPDM), nitrile rubber (NBR), styrene-butadiene rubber (SBR) or natural rubber.

4. Multilayer winter sports equipment according to any one of the preceding claims, wherein the film has a Shore A hardness of between 30 and 80.

5. Multilayer winter sports equipment according to any one of the preceding claims, wherein the tear strength of the film is at least 4 N/mm².

6. Multi-layer winter sports equipment according to any of the preceding claims,
wherein the woven fabric, knitted fabric and/or the nonwoven fabric is bonded to the rubber layer (20), in particular pressed onto the rubber layer (20), and wherein the bonded connection is preferably provided without an additional material, in particular without the use of an adhesive.

7. Multi-layer winter sports equipment according to any of the preceding claims,
wherein the rubber layer (20) is in contact with the environment via interstices in the woven fabric, knitted fabric and/or the nonwoven fabric.

8. Multi-layer winter sports equipment according to any one of the preceding claims, wherein the upper side and the underside are coated differently.

9. Multi-layer winter sports equipment according to any one of the preceding claims, wherein the woven fabric, knitted fabric or the nonwoven fabric itself is provided with a coating.

10. Method of manufacturing a multilayer winter sports equipment according to any one of claims 1 to 9,
wherein a rubber layer (20) with a flat upper side (22) and a flat underside (24) is provided and
wherein the upper side (22) and/or the underside (24) of the rubber layer (20) is coated with a woven fabric, a knitted fabric and/or a nonwoven fabric and wherein an adhesive penetrates through interstices in the woven fabric, knitted fabric and/or nonwoven fabric to the surface of the rubber layer (20).

11. Method according to claim 10,
wherein the woven fabric, knitted fabric and/or the nonwoven fabric is pressed with the rubber layer (20), in particular in a calender.

12. Method according to claim 10 or 11,
wherein the rubber layer (20) is vulcanized after coating with the woven fabric, knitted fabric and/or the nonwoven fabric.

13. Method according to any one of claims 10 - 12,
wherein the rubber layer (20) coated with the woven fabric, knitted fabric and/or the nonwoven fabric is pickled after vulcanization.

## Revendications

1. Equipement de sport d'hiver multicouche (40) pour glisser sur la neige, comprenant
une pluralité de couches reliées entre elles,
une feuille élastique étant disposée entre des couches voisines, laquelle est reliée par coopération de matière aux couches voisines respectives au moyen d'un adhésif,
une feuille (10) étant utilisée comme feuille élastique, qui présente ce qui suit :
une couche de caoutchouc (20) ayant une face supérieure plane (22) et une face inférieure plane (24),
la face supérieure (22) et/ou la face inférieure (24) de la couche de caoutchouc (20) étant revêtue d'un tissu, d'un tricot et/ou d'un non-tissé,
**caractérisée en ce que** l'allongement à la rupture est d'au moins 50 % et la résistance au pelage est d'au moins 1 N/m.

2. Equipement de sport d'hiver multicouche selon la revendication 1,
dans lequel le tissu, le tricot et/ou le non-tissé forme une face extérieure (12, 14) de la feuille (10) et est appliqué de l'extérieur sur la couche de caoutchouc (20).

3. Equipement de sport d'hiver multicouche selon l'une des revendications précédentes,
dans lequel la couche de caoutchouc (20) est réalisée sous forme de feuille de caoutchouc et présente un matériau qui contient des élastomères, comme par exemple du caoutchouc éthylène-propylène-diène (EPDM), du caoutchouc nitrile (NBR), du caoutchouc styrène-butadiène (SBR) ou du caoutchouc naturel.

4. Equipement de sport d'hiver multicouche selon l'une des revendications précédentes,
dans lequel la feuille présente une dureté Shore A comprise entre 30 et 80.

5. Equipement de sport d'hiver multicouche selon l'une des revendications précédentes,
dans lequel la résistance à la déchirure de la feuille est d'au moins 4 N/mm².

6. Equipement de sport d'hiver multicouche selon l'une des revendications précédentes,
dans lequel le tissu, le tricot et/ou le non-tissé est relié à la couche de caoutchouc (20) par une liaison par coopération de matière, en particulier est pressé sur la couche de caoutchouc (20), et, de préférence, la liaison par coopération de matière est prévue sans un matériau supplémentaire, en particulier sans utilisation d'un adhésif.

7. Equipement de sport d'hiver multicouche selon l'une des revendications précédentes,
dans lequel la couche de caoutchouc (20) est en liaison avec l'environnement par des interstices situés dans le tissu, le tricot et/ou le non-tissé.

8. Equipement de sport d'hiver multicouche selon l'une des revendications précédentes,
dans lequel la face supérieure et la face inférieure sont revêtues différemment.

9. Equipement de sport d'hiver multicouche selon l'une des revendications précédentes,
dans lequel le tissu, le tricot ou le non-tissé lui-même est pourvu d'un revêtement.

10. Procédé de fabrication d'un équipement de sport d'hiver multicouche selon l'une des revendications 1 à 9,
dans lequel on fournit une couche de caoutchouc (20) ayant une face supérieure plane (22) et une face inférieure plane (24), et
la face supérieure (22) et/ou la face inférieure (24) de la couche de caoutchouc (20) est revêtue d'un tissu, d'un tricot et/ou d'un non-tissé, et un adhésif pénètre jusqu'à la surface de la couche de caoutchouc (20) par des interstices situés dans le tissu, le tricot et/ou le non-tissé.

11. Procédé selon la revendication 10,
dans lequel le tissu, le tricot et/ou le non-tissé est comprimé avec la couche de caoutchouc (20), en particulier dans une calandre.

12. Procédé selon la revendication 10 ou 11,
dans lequel la couche de caoutchouc (20) est vulcanisée après avoir été revêtue du tissu, du tricot et/ou du non-tissé.

13. Procédé selon l'une des revendications 10 à 12,
dans lequel la couche de caoutchouc (20) revêtue du tissu, du tricot et/ou du non-tissé est décapée après avoir été vulcanisée.
